# EUROPEAN PATENT SPECIFICATION

(11) **EP 0 755 622 B1**
(45) Date of publication and mention of the grant of the patent: **09.10.2002**
(21) Application number: 96202005.3
(22) Date of filing: 15.07.1996
(51) Int. Cl.: A01D 78/10

(54) **A hay-making machine**
Heuwerbungsmaschine
Machine de fenaison

(30) Priority: 24.07.1995 NL 1000874
(43) Date of publication of application: 29.01.1997
(73) Proprietor: MAASLAND N.V., 3155 PD Maasland (NL)
(72) Inventor: Van den Engel, Alfonsus Jacobus, 3137 KC Vlaardingen (NL)
(74) Representative: Corten, Maurice Jean F.M.

(56) References cited:
- EP-A- 0 273 513
- DE-A- 2 513 297
- FR-A- 2 390 895
- GB-A- 2 016 886
- NL-A- 7 200 441
- US-A- 4 026 093

## Description

The present invention relates to a hay-making machine as described in the preamble of claim 1.

Suchlike hay-making machines are generally known, for example from NL-A-7200441 or the prospect "KUHN Girofaneur GF" printed in 1990 for the year 1991.

The present invention has for its object to provide an alternative haymaking machine. According to the invention, this will be achieved in a favourable manner by means of a construction according to the characterizing part of the following claim 1. In case of a drawn hay-making machine, a suchlike construction realizes in a favourable manner the position of the lower rotating field of a cultivating element relative to the soil surface.

From US-A-4,026,093 a screw spindle for positioning the lower rotating field of a cultivating element relative to the soil surface is known per se. However, the inventive connection of the screw spindle to the coupling device is not disclosed herein.

In a particular embodiment, the coupling element according to the invention comprises an abutment face extending in the longitudinal direction of the frame, for the purpose of fastening a coupling device. This has the advantage that, with a minimal adjustment, a coupling device of a certain size can be fastened to hay-making machines of different dimensions. For the purpose of achieving various specific machine widths, there are applied, in practice, cultivating members of different dimensions. Due to this, the distance of a cultivating member to the central area of the machine, and thus the length of a connecting piece of the central frame part, may vary per machine. By providing the coupling element with a surface of sufficient length extending in the longitudinal direction of a frame, a coupling device of a certain size can be used, without drastic measures having to be taken, for hay-making machines including cultivating members of different diameters.

In a specific embodiment, the coupling element according to the invention is designed as a, preferably U-shaped, bracket. In relation to the above-described embodiment according to the invention this has the disadvantage that the coupling elements for machines having an equal number of rotors but different working widths, have to be designed in different sizes, at least when a suchlike coupling element is included in the machine while using the fastening elements present therein. On the other hand, the specific embodiment has the advantage that both the abutment face of the coupling element and the central frame part become stiffer. This is in particular important when the machine has a very large width and is provided e.g. with six or more cultivating members.

For a better understanding of the present invention and to show how the same may be carried into effect, reference will now be made, by way of example, to the accompanying drawings, in which:
Figure 1 shows, in plan view, a machine according to the invention; and
Figure 2 is a view taken on the line II - II in Figure 1.

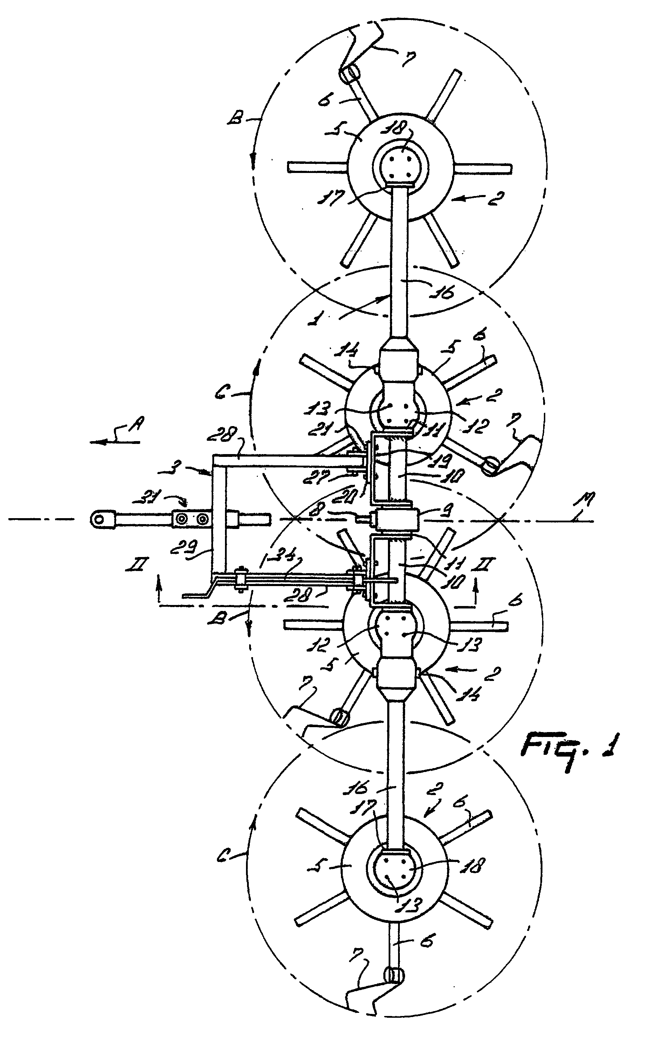

Figure 1 shows, in plan view, a hay-making machine according to the invention, provided with a frame 1 extending at least during operation substantially horizontally and substantially transversely to the direction of travel A. To the frame 1 there are attached cultivating members 2 in a manner known per se, which cultivating members, during operation, according to the directions of rotation B and C, are rotating in pairs in opposite directions. In this way the crop laying on the ground is treated by a shaking movement. In the centre of the machine there is included a coupling device 3 for the connection of the machine to a proper vehicle. A rotor 2 comprises a central part 5, to which there are attached arms 6 for cultivating elements 7 appropriate to act on the crop. Additionally, each rotor comprises a non-shown supporting member for its support on the soil.

Near the imaginary central area M of the machine, orientated vertically and in the direction of travel, the frame 1 comprises a central gearbox 9 having a square transmission. The gearbox 9 includes an ingoing journal to which a driving coupling shaft may be connected and two outgoing journals orientated at right angles thereto and in the longitudinal direction of the frame 1. The frame 1 comprises on both sides of the gearbox 9 a connecting piece 10 designed as a tubular profile and through which a drive shaft 24 of the machine is guided. In the embodiment shown, the connecting piece 10 includes a bracket 19. The bracket 19 is integral with flanges attached to the tubular profile by means of which flanges the connecting piece 10 is mounted against an abutment face 11 of a drive housing 12 of the frame 1. The drive housing 12, in which, via a square transmission, the drive of a cultivating member 2 takes place, also serves as a support for the cultivating member 2. For that purpose there are provided boreholes in the upper part of the housing 12 for bolts 13, by means of which a rotor 2 is clamped with an upper part thereof against the housing 12. The housings 12, the central connecting pieces 10 and the gearbox 9 constitute together the central frame part of the machine.

On each lateral side of the central frame part there is attached, pivotably about a pivot shaft 14 orientated substantially horizontally and in the direction of travel, at least one outer frame part 16. An outer frame part 16 comprises a tubular profile, through which the drive shaft of the machine is guided, which profile, near its inner end, is provided with a forked connection, in which the pivot shaft 14 is located, and which, near its outer end, is provided with a flange 17 for its connection with an outer drive housing 18 for an outer cultivating member 2. During operation, the pivot shafts 14 render it possible to adjust the machine to unevennesses in the soil surface and to pivot the machine into a transport position, whereby an outer frame part 16 extends substantially vertically.

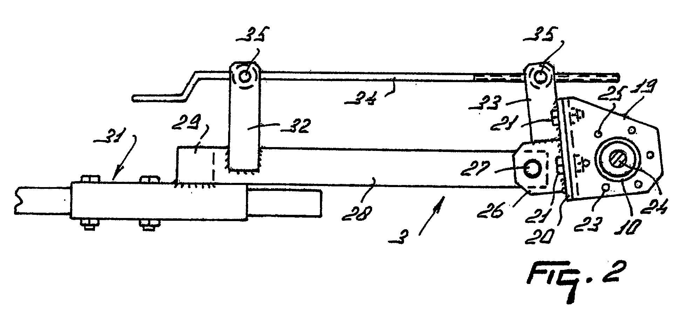

The coupling device 3 shown in Figures 1 and 2 comprises a framework that consists inter alia of a pair of longitudinal girders 28 provided, near their rear ends, with flanges 20 that are mounted, via a nutted bolt connection 21, on brackets 19. Near their foremost ends, the longitudinal girders 28 are interconnected by a crossgirder 29. To the crossgirder 29 there is attached a pole 31 orientated in the direction of travel A and changeable in length. The longitudinal girders 28 are each, pivotably about a pivot shaft 27, connected to the fastening flange 20 of the coupling device 3. For that purpose the fastening flange 20 is provided with pairs of lugs 26, in which the pivot shaft 27 is included. Figure 2 shows that one of the two longitudinal girders 28 is provided, near its front side, with a bracket 32, pivotable about a pivot shaft 35 and extending upwards from the longitudinal girder 28, which bracket supports the foremost end of a screw spindle extending substantially parallel to the longitudinal girder 28. Near its rear end part, the screw spindle 34 is screwably included in a supporting element being also pivotable about a pivot shaft 35. The rearmost pivot shaft 35 is supported by a bracket 33, which is attached to the fastening flange 20 connected with the relevant longitudinal girder 28. In case of a drawn hay-making machine, a suchlike construction realizes in a favourable manner the position of the lower rotating field of a cultivating element 7 relative to the soil surface.

Figure 2 furthermore shows the end part of the coupling element 19 constituting the flange of the connecting piece 10. In the coupling element 19 there are provided boreholes 23 being concentrically arranged around the connecting piece 10 which, in this embodiment, is designed as a tube. The connecting piece 10 is connected with the gearbox 9, respectively the housing 12 via bolts 25, guided through the boreholes 23 and extending in the longitudinal direction of the frame. The bolts 25 constitute fastening elements that are already present in the hay-making machines known per se. Through the connecting piece 10 there extends a drive shaft 24 of the machine.

In a preferred embodiment according to the invention, a coupling element 19 is integral with a connecting piece 10 of the central frame part 1. In the embodiment shown, this is realized by welding a plate part constituting the coupling element 19 to a tube part.

In a non-shown alternative embodiment, the coupling element is designed as a square one. The abutment face of a coupling element, being either of a square or a bracket-shaped design, extending in the longitudinal direction of the frame, enables the use of a coupling device of a certain size for machines of different dimensions. In order to achieve working widths ranged between the machine widths determined by the cultivating members, hay-making machines are usually designed in two or more variants, distinguishing themselves by the diametral size of the cultivating members used therein. According to the size of the cultivating members, the length of the connecting pieces 10 in the central frame part changes. In the embodiment shown and described, one coupling device can simply be used for each variant of the machine, the abutment face of the coupling element extending in the longitudinal direction of the frame. In case of fastening by means of e.g. nutted bolts, the presence of slot holes extending in the longitudinal direction of the frame or the presence of several groups of boreholes is sufficient.

## Claims

1. A hay-making machine having a frame (1) extending at least during operation substantially transversely to the direction of travel A, to which there are attached cultivating members (2) pivotable about substantially vertically orientated pivot shafts, which frame (1) comprises at least a central frame part (9, 10, 12) and possibly lateral frame parts (16, 18) pivotable about pivot shafts (14) substantially orientated in the direction of travel A, to which central frame part (9, 10, 12) there is attached a coupling device (3) for the connection of the machine to a vehicle, the central frame part (9, 10, 12) being provided with at least one coupling element (19), via which different coupling devices (3) can be connected to the frame (1), **characterized in that** the coupling device (3) comprises a framework having a pair of longitudinal girders (28) provided, near their rear ends, with flanges (20) that are mounted, via a nutted bolt connection (21), on the coupling element (19), one of the two longitudinal girders (28) being provided, near its front side, with a bracket (32), pivotable about a pivot shaft (35) and extending upwards from the longitudinal girder (28), which bracket (32) supports the foremost end of a screw spindle (34) extending substantially parallel to the longitudinal girder (28), and that
near its rear end part, the screw spindle (34) is screwably included in a supporting element being also pivotable about a pivot shaft (35), and that
the rearmost pivot shaft (35) is supported by a bracket (33), which is attached to the fastening flange (20) connected with the relevant longitudinal girder (28).

2. A hay-making machine as claimed in claim 1, **characterized in that** near their foremost ends, the longitudinal girders (28) are interconnected by a crossgirder (29).

3. A hay-making machine as claimed in claim 2, **characterized in that** to the crossgirder (29) there is attached a pole (31) orientated in the direction of travel (A) and changeable in length.

4. A hay-making machine as claimed in any one of the preceding claims, **characterized in that** the longitudinal girders (28) are each, pivotably about a pivot shaft (27), connected to the fastening flange (20) of the coupling device (3).

5. A hay-making machine as claimed in claim 4, **characterized in that** the fastening flange (20) is provided with pairs of lugs (26), in which the pivot shaft (27) is included.

6. A hay-making machine as claimed in any one of the preceding claims, **characterized in that** the coupling element (19) is constituted by a plate part.

7. A hay-making machine as claimed in claim 7, **characterized in that** the coupling element (19) comprises an abutment face, extending in the longitudinal direction of the frame (1), for the purpose of connecting a coupling device (3, 36, 41) thereto.

8. A hay-making machine as claimed in any one of the preceding claims 1 to 5, **characterized in that** the coupling element (19) is bracket-shaped.

9. A hay-making machine as claimed in any one of the preceding claims, **characterized in that** the coupling element (19) is produced as an integral part.

## Patentansprüche

1. Heuwerbungsmaschine mit einem sich zumindest im Betrieb im wesentlichen quer zur Arbeitsrichtung A erstreckenden Rahmen (1), an dem Bearbeitungsglieder (2) angebracht sind, die um im wesentlichen vertikal ausgerichtete Schwenkachsen schwenkbar sind, wobei der Rahmen (1) zumindest einen mittleren Rahmenteil (9, 10, 12) und eventuell seitliche Rahmenteile (16, 18) umfaßt, die um sich im wesentlichen in Arbeitsrichtung A erstreckende Schwenkachsen (14) schwenkbar sind, wobei an dem mittleren Rahmenteil (9, 10, 12) eine Anschlußvorrichtung (3) zum Anschluß der Maschine an ein Fahrzeug angebracht ist, wobei der mittlere Rahmenteil (9, 10, 12) mit mindestens einem Anschlußelement (19) versehen ist, über das unterschiedliche Anschlußvorrichtungen (3) mit dem Rahmen (1) verbunden werden können, **dadurch gekennzeichnet, daß** die Anschlußvorrichtung (3) einen Rahmen mit zwei Längsträgern (28) umfaßt, die nahe ihren hinteren Enden mit Flanschen (20) versehen sind, die über eine Mutter-Schrauben-Verbindung (21) an dem Anschlußelement (19) angebracht sind, wobei einer der beiden Längsträger (28) nahe seiner Vorderseite mit einem Bügel (32) versehen ist, der um eine Schwenkachse (35) schwenkbar ist und sich von dem Längsträger (28) nach oben erstreckt, wobei der Bügel (32) das vordere Ende einer Gewindespindel (34) abstützt, die sich im wesentlichen parallel zu dem Längsträger (28) erstreckt, und daß die Gewindespindel (34) nahe ihrem hinteren Endabschnitt in einem Stützelement einschraubbar gehalten ist, das ebenfalls um eine Schwenkachse (35) schwenkbar ist, und daß die hintere Schwenkachse (35) durch einen Bügel (33) abgestützt ist, der an dem mit dem entsprechenden Längsträger (28) verbundenen Befestigungsflansch (20) angebracht ist.

2. Heuwerbungsmaschine nach Anspruch 1,
**dadurch gekennzeichnet, daß** die Längsträger (28) nahe ihren vorderen Enden durch einen Querträger (29) miteinander verbunden sind.

3. Heuwerbungsmaschine nach Anspruch 2,
**dadurch gekennzeichnet, daß** an dem Querträger (29) eine Deichsel (31) angeordnet ist, die in Arbeitsrichtung (A) ausgerichtet und längenverstellbar ist.

4. Heuwerbungsmaschine nach einem der vorhergehenden Ansprüche,
**dadurch gekennzeichnet, daß** die Längsträger (28) jeweils um eine Schwenkachse (27) schwenkbar sind, die mit dem Befestigungsflansch (20) der Anschlußvorrichtung (3) verbunden ist.

5. Heuwerbungsmaschine nach Anspruch 4,
**dadurch gekennzeichnet, daß** der Befestigungsflansch (20) mit Paaren von Ansätzen (26) versehen ist, in denen die Schwenkachse (27) gehalten ist.

6. Heuwerbungsmaschine nach einem der vorhergehenden Ansprüche,
**dadurch gekennzeichnet, daß** das Anschlußelement (19) durch eine Platte gebildet ist.

7. Heuwerbungsmaschine nach Anspruch 6,
**dadurch gekennzeichnet, daß** das Anschlußelement (19) eine sich in Längsrichtung des Rahmens (1) erstreckende Anlagefläche umfaßt, um eine Anschlußvorrichtung (3, 36, 41) daran anzuschließen.

8. Heuwerbungsmaschine nach einem der vorhergehenden Ansprüche 1 bis 5,
**dadurch gekennzeichnet, daß** das Anschlußelement (19) bügelförmig ist.

9. Heuwerbungsmaschine nach einem der vorhergehenden Ansprüche,
**dadurch gekennzeichnet, daß** das Anschlußelement (19) einstückig ausgebildet ist.

## Revendications

1. Machine de fenaison comportant un châssis (1) qui s'étend au moins pendant le fonctionnement de manière sensiblement transversale dans la direction de déplacement (A), à laquelle sont attachés des éléments de scarifiage (2) pouvant être pivotés autour de boulons d'articulation orientés de manière sensiblement verticale, lequel châssis (1) comprend au moins une partie de châssis centrale (9, 10, 12) et éventuellement des parties de châssis latérales (16, 18) pouvant être pivotées autour de boulons d'articulation (14) orientés sensiblement dans la direction de déplacement (A), à laquelle partie de châssis centrale (9, 10, 12) est attaché un dispositif de couplage (3) destiné à connecter la machine à un véhicule, la partie de châssis centrale (9, 10, 12) étant munie d'au moins un élément de couplage (19), par l'intermédiaire duquel différents dispositifs de couplage (3) peuvent être connectés au châssis (1), **caractérisée en ce que** le dispositif de couplage (3) comprend une charpente ayant une paire de poutres longitudinales (28) munies, au niveau de leurs extrémités arrière, de brides (20) qui sont montées, par l'intermédiaire d'une connexion à écrous et boulons (21), sur l'élément de couplage (19), l'une des poutres longitudinales (28) étant munie, au niveau de son côté avant, d'un support (32), pouvant être pivoté autour d'un boulon d'articulation (35) et s'étendant vers le haut depuis la poutre longitudinale (28), lequel support (32) supporte l'extrémité la plus avant d'une broche à vis (34) qui s'étend de manière sensiblement parallèle à la poutre longitudinale (28) et **en ce que**
à proximité de sa partie d'extrémité arrière, la broche à vis (34) est incluse de manière à être vissée dans un élément de support qui peut également être pivoté autour d'un boulon d'articulation (35) et **en ce que**
le boulon d'articulation le plus en arrière (35) est supporté par un support (33), qui est attaché à la bride de fixation (20) connectée à la poutre longitudinale (28) appropriée.

2. Machine de fenaison selon la revendication 1, **caractérisée en ce que**, à proximité de leurs extrémités les plus en avant, les poutres longitudinales (28) sont connectées entre elles par une poutre transversale (29).

3. Machine de fenaison selon la revendication 2, **caractérisée en ce que**, à la poutre transversale (29) est attaché un timon (31) orienté dans la direction de déplacement (A) et dont la longueur peut être modifiée.

4. Machine de fenaison selon l'une quelconque des revendications précédentes, **caractérisée en ce que** les poutres longitudinales (28) sont chacune connectées, de manière pivotable autour d'un boulon d'articulation (27), à la bride de fixation (20) du dispositif de couplage (3).

5. Machine de fenaison selon la revendication 4, **caractérisée en ce que** la bride de fixation (20) est munie de paires d'oreilles (26), dans lesquelles le boulon d'articulation (27) est inclus.

6. Machine de fenaison selon l'une quelconque des revendications précédentes, **caractérisée en ce que** l'élément de couplage (19) se compose d'une partie formant plaque.

7. Machine de fenaison selon la revendication 7, **caractérisée en ce que** l'élément de couplage (19) comprend une face de butée qui s'étend dans la direction longitudinale du châssis (1), dans le but de connecter un dispositif de couplage (3, 36, 41) à celui-ci.

8. Machine de fenaison selon l'une quelconque des revendications précédentes 1 à 5, **caractérisée en ce que** l'élément de couplage (19) est en forme d'oreille.

9. Machine de fenaison selon l'une quelconque des revendications précédentes, **caractérisée en ce que** l'élément de couplage (19) est fabriqué d'un seul tenant.
